# EUROPÄISCHE PATENTANMELDUNG

(11) **EP 1 657 372 A2**
(43) Veröffentlichungstag der Anmeldung: **17.05.2006**
(21) Anmeldenummer: 05024066.2
(22) Anmeldetag: 04.11.2005
(51) Int. Cl.: E03F 3/04, F16L 41/00

(54) **Rohrverbindung mit variablem Winkel**

(30) Priorität: 04.11.2004 DE 202004016989 U
(71) Anmelder: Funke Kunststoffe GmbH, 59071 Hamm-Uentrop (DE)
(72) Erfinder: Funke, Norbert, 48324 Sendenhorst (DE); Funke, Hans-Günter, 48324 Sendenhorst (DE)
(74) Vertreter: Hoffmeister, Helmut

(57) **Zusammenfassung**

Ein Kugelgelenk-Sattelstück (100) zum flüssigkeitsdichten Verbinden eines ersten Rohrs mit einem Spitzende (221) eines zweiten Rohrs (220) besteht aus einem Rohrelement (10), das an seiner Innenseite mit wenigstens einer Kugelausnehmung (12) versehen ist und einem in diese einsetzbaren Kugelstumpfelement (20), das an seiner Außenumfangsfläche wenigstens eine Dichtungsaufnahmekammer (21, 22) aufweist und das in einem inneren Hohlraum als Rohrmuffe zur Aufnahme des Spitzendes (221) des Rohres (220) ausgebildet ist.

Die Rohrmuffe des Kugelstumpfelements (20) ist durch einen kreisringförmigen Endanschlagssteg (24) begrenzt, der sich an eine Rohrmuffeninnenwand anschließt und senkrecht zu dieser angeordnet ist. Das am Endanschlagsteg (24) gelegene Ende des Kugelstumpfelements (20) ist als Spitzrippe (25) ausgebildet, deren Außenseite wenigstens teilweise durch die Kugelumfangsfläche des Kugelstumpfelements (20) gebildet ist und deren Innenseite sich vom Innenumfang des Endanschlagsstegs (24) zu der Kugelumfangsfläche hin aufweitet.

## Beschreibung

Die Erfindung betrifft ein Kugelgelenk-Sattelstück zum flüssigkeitsdichten Verbinden eines ersten Rohrs mit einem Spitzende eines zweiten Rohrs, bestehend aus einem Rohrelement, das an seiner Innenseite mit wenigstens einer Kugelausnehmung versehen ist, und aus einem in die Kugelausnehmung einsetzbaren Kugelstumpfelement, das an seiner Außenumfangsfläche wenigstens eine Dichtungsaufnahmekammer aufweist und in einem inneren Hohlraum als Rohrmuffe zur Aufnahme des Spitzendes der Rohres ausgebildet ist.

Aus der EP 930 455 A1 ist ein solches Kugelgelenk-Sattelstück bekannt. Mit diesem ist es möglich, bei einer Verbindung zweier Rohrleitungen einen Winkelversatz auszugleichen, der sich aus dem örtlichen Gegebenheiten auf der Baustelle ergeben kann. Durch den Ausgleich des Winkelversatzes ist es insbesondere möglich, Rohrleitungen weitgehend spannungsfrei zu verlegen und dennoch flüssigkeitsdicht zu verbinden.

Probleme haben sich bei dem bewährten Kugelgelenk-Sattelstück gelegentlich beim Einsetzen eines Spitzendes eines Rohrs in die Rohrmuffe des Kugelstumpfelements ergeben.

Bei dem bekannten Kugelgelenk-Sattelstück ist am Ende der Rohrmuffe ein konischer Absatz vorgesehen, der mit den an den Spitzenden meist vorhandenen Fasen kompatibel ist. Da aber an den Fasen des Spitzendes bzw. an dem Konus der Muffe des Kugelstumpfelements ein spitzer Winkel gegeben ist, kommt es beim kräftigen Einschieben des Spitzendes in das Kugelstumpfelement zu einer Keilwirkung, durch die das Kugelstumpfelement aufgeweitet und umfänglich auf Zug beansprucht wird, so dass es zum Bruch des meist aus einem Kunststoff gebildeten Kugelstumpfelements kommen kann.

Es stellt sich daher die Aufgabe, ein Kugelgelenk-Sattelstück der eingangs genannten Art so zu verbessern, dass eine Beschädigung des Kugelstumpfelements auch bei kräftigen Stößen über ein eingesetztes Spitzende nicht beschädigt wird.

Diese Aufgabe wird erfindungsgemäß dadurch gelöst, dass die Rohrmuffe des Kugelstumpfelements durch einen kreisringförmigen Endanschlagssteg begrenzt ist, der sich an eine Rohrmuffeninnenwand anschließt und senkrecht zu dieser angeordnet ist und dass das am Endanschlagsteg gelegene Ende des Kugelstumpfelements als Spitzrippe ausgebildet ist, deren Außenseite wenigstens teilweise durch die Kugelumfangsfläche des Kugelstumpfelements gebildet ist und deren Innenseite sich vom Innenumfang des Endanschlagsstegs zu der Kugelumfangsfläche hin aufweitet.

Als Spitzrippe ist hier eine etwa dreieckige Querschnittskonfiguration bezeichnet, die nicht durch gerade Kanten begrenzt sein muss. Die Seitenflächen können ihrerseits auch konkav oder konvex sein. Sie können auch durch radiale oder axiale Nuten unterbrochen sein. Die Spitzrippe mündet im Querschnitt gesehen in einer Kuppe, die aber nicht unbedingt als scharfkantiger Grat ausgebildet sein muss, sondern auch gerundet sein kann.

Durch die erfindungsgemäße Verbesserung des Kugelstumpfelements des Kugelgelenk-Sattelstücks ist ein definierter axialer Endanschlag geschaffen. Ein eingesetztes Spitzende eines Rohres prallt stirnseitig gegen den Endanschlag, ohne die Rohrmuffe innerhalb des Kugelstumpfelements aufzuweiten. Außerdem ist durch die Spitzrippe eine Abstützung des Endanschlagstegs gewährleistet. Ein Impuls, der im Moment eines Anschlags des Rohrspitzendes am Endanschlagsteg ausgeübt wird, wird über die Spitzrippe auf den Außenumfang des Kugelstumpfelements und von dort in die Kugelausnehmung des Rohrelements abgeleitet.

Vorzugsweise sind am Außenumfang des Kugelstumpfelements zwei Dichtungsaufnahmekammern vorhanden. Hierdurch wird eine erhöhte Sicherheit gegen Undichtigkeiten gegeben.

Bei der bevorzugten Ausführungsform ist die Rohrmuffe des Kugelstumpfelements an ihrem Innenumfang mit wenigstens einer Dichtungsaufnahmekammer versehen. Damit muss nur das Spitzende eines Rohrs in die Rohrmuffe eingeschoben werden und ist dann gegenüber dem Kugelstumpfelement abgedichtet, ohne dass weitere Maßnahmen ergriffen werden müssen.

Die Innenseite der Spitzrippe ist vorzugsweise in einem Winkel von 9° bis 15° zur Längsachse des Rohrelements angestellt. Durch diesen spitzen Winkel wird eine relativ lange Spitzrippe mit entsprechend guter Abstützwirkung geschaffen. Zugleich erweitert sich der Innendurchmesser der Rohrmuffe des Kugelstumpfelements ausgehend von dem Öffnungsdurchmesser des Endanschlagstegs nach außen, so dass ein sanfter Übergang geschaffen wird, der strömungstechnisch günstig ist.

Die Außenseite der Spitzrippe sollte wenigstens eine umlaufende Nut aufweisen. Hierdurch werden bei der Fertigung des Kugelstumpfelements aus Kunststoff eine Materialanhäufung und dadurch verursachte unerwünschte Änderungen der Geometrie während des Abkühlens vermieden.

Das Rohrende des Kugelgelenk-Sattelstücks, das die Kugelausnehmung enthält, kann je nach Anwendungszweck verschiedenartig ausgebildet sein:

Bei einer ersten Ausführungsform ist das Rohrelement an seinem Außenumfang mit einem Gewinde und/oder mit Rastrippen versehen, so dass das Rohrelement mit an sich bekannten Zubehörteilen direkt an eine Rohrleitung größeren Umfangs angeschraubt werden kann.

Weiterhin kann das Rohrelement mit einem Spitzende versehen sein. Damit ist das Kugelgelenk-Sattelstück innerhalb einer aus Rohren mit Muffen- und Spitzende gebildeten Rohrleitung einsetzbar, um einen Winkelversatz auszugleichen. Ein erstes Rohr wird mit seinem Spitzende in das Kugelgelenk-Sattelstück eingeschoben. Das Kugelgelenk-Sattelstück wiederum wird dann mit seinem eigenen Spitzende in die Muffe eines weiteren Rohrs eingeschoben. Die Verlegerichtung der Rohre kann so beibehalten werden.

Für den Fall, dass Rohrleitungen mit gegensätzlich zueinander ausgerichteten Spitz- bzw. Muffenenden zu verbinden sind, kann das Rohrelement des Kugelgelenk-Sattelstücks auch als Rohrmuffe ausgebildet sein.

Die Erfindung wird nachfolgend mit Bezug auf die Zeichnung näher erläutert. Die Figuren zeigen jeweils in teilweise geschnittener Darstellung:
- Figur 1a, 1b: eine erste Ausführungsform eines Kugelgelenk-Sattelstücks in verschiedenen Stellungen;
- Figur 2: ein Kugelstumpfelement;
- Figur 3: eine zweite Ausführungsform eines Kugelgelenk-Sattelstücks und
- Figur 4: eine dritte Ausführungsform eines Kugelgelenk-Sattelstücks.

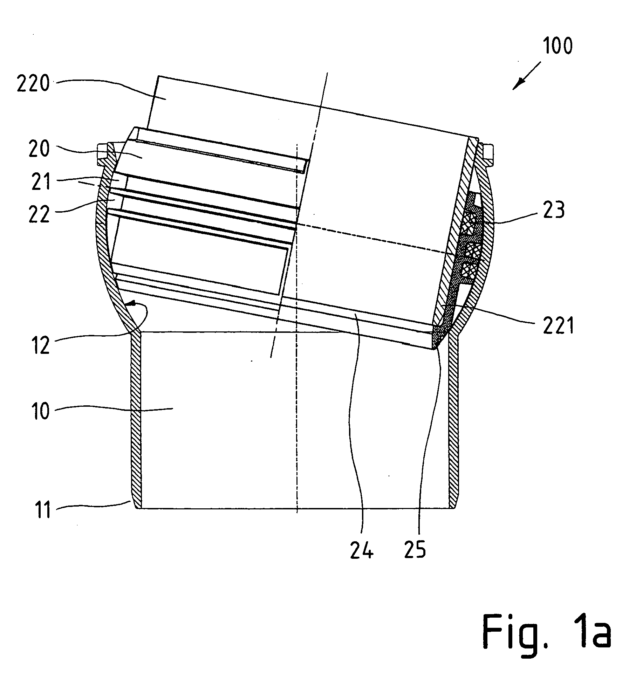

In Figur 1a ist eine erste Ausführungsform eines Kugelgelenk-Sattelstück 100 dargestellt, das im Wesentlichen aus einem Rohrelement 10 und einem Kugelstumpfelement 20 besteht.

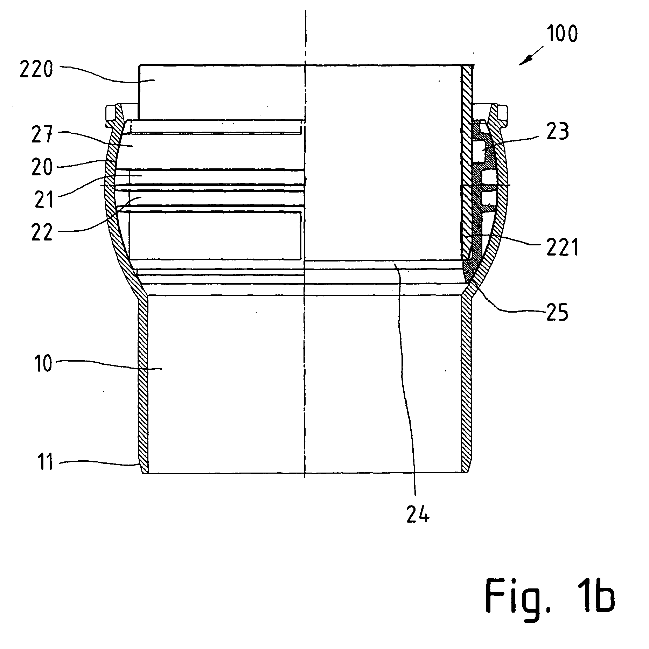

Das Rohrelement 10 erweitert sich an seinem einen Ende in eine Kugelausnehmung 12. An seinem anderen Ende ist das Rohrelement in der in den Figur 1a und 1b dargestellten Ausführungsform als Spitzende 11 ausgebildet.

Das Kugelstumpfelement 20 besitzt teilweise kugelstumpfförmige Oberflächenabschnitte, teilweise auch umfänglich oder radial angeordnete Rippen, die jedoch alle durch eine gemeinsame Kugel-Hüllfläche begrenzt sind, so dass das Kugelstumpfelement 20 innerhalb der Kugelausnehmung 12 des Rohrelements 10 frei beweglich ist.

In seinem inneren Hohlraum ist das Kugelstumpfelement 20 als Rohrmuffe ausgebildet, in die ein Spitzende 221 eines Rohrs 220 eingeschoben werden kann. In eine Dichtungsaufnahmekammer 23 ist ein Dichtungsring eingezogen, durch den das Spitzende 221 gegenüber dem Kugelstumpfelement 20 abgedichtet wird.

Das Kugelstumpfelement 20 wird seinerseits durch zwei Dichtungsringe in den Dichtungsaufnahmekammern 21, 22 gegenüber der Kugelausnehmung 12 des Rohrelements 10 abgedichtet.

Erfindungswesentlich ist, dass im Endbereich des Kugelstumpfelements 20 ein Endanschlagsteg 24 vorgesehen ist, auf den das Spitzende 221 trifft, ohne die Rohrmuffe des Kugelstumpfelements 20 aufzuweiten. Wesentlich ist weiterhin, dass ausgehend von dem Endanschlagsteg 24 ein Rücksprung in Richtung der äußeren Kugeloberfläche erfolgt. Zwischen der äußeren Kugeloberfläche und dem innen liegenden Rücksprung wird so eine Spitzrippe 25 ausgebildet.

Das Einfügen des Spitzendes 221 in die Rohrmuffe erfolgt in der Regel in gestreckter Lage des Kugelgelenk-Sattelstücks 100, das heißt, die Längsachsen des Rohrelements 10 und des Kugelstumpfelements 20 fluchten. Insbesondere in dieser Lage, die in Figur 1b dargestellt ist, wird der Endanschlagsteg 24 durch die Spitzrippe 25 an der Kugelausnehmung 12 des Rohrelements 10 abgestützt. Auch bei einem harten Anschlag der Stirnseite des Spitzendes 221 werden die Kräfte in einer günstigen Richtung umgelenkt, so dass ein Materialbruch im Kugelstumpfelement 20, aber auch am Rohrelement 10 im Bereich der Kugelausnehmung 12 vermieden wird.

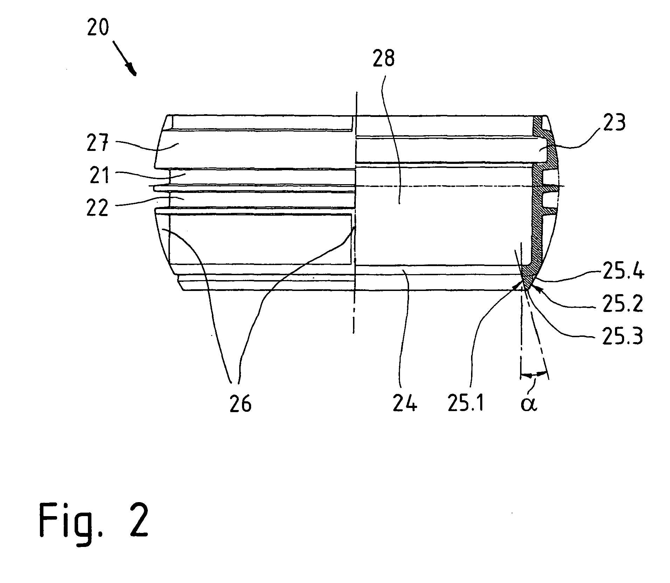

Das Kugelstumpfelement 20 ist im Detail in Figur 2 dargestellt. Es gibt zu beiden axialen Enden hin Bereiche, die streng geometrisch als Kugelstümpfe bzw. Kugelscheiben ausgebildet sind. Es sind dies ein oberer Stützabschnitt 27 und wenigstens eine Außenseite 25.2 der Spitzrippe 25 am anderen Ende. Die dazwischen liegenden Bereiche des Außenumfangs des Kugelstumpfelements 20 können mit Rippen am Umfang verstärkt sein, zwischen denen zugleich Dichtungsaufnahmekammern 21, 22, 23 ausgebildet sind, oder auch axiale Stützrippen 26 aufweisen. Die Rippen enden an einer gemeinsamen kugelförmigen Kugel-Hüllkurve, um die Kompatibilität mit und die Beweglichkeit in der Kugelausnehmung 12 zu gewährleisten.

Ein innerer Hohlraum 28 besitzt eine lichte Weite entsprechend dem Außendurchmesser eines einzuschiebenden Spitzendes eines Rohrs. Die axiale Begrenzung wird durch einen Endanschlagsteg 24 geschaffen, der im wesentlichen senkrecht zur Längsachse und damit auch senkrecht zur Innenwand des Hohlraums 28 ausgerichtet ist. Die Innenseite 25.1 der Spitzrippe 25 läuft in einem Winkel α vom Innendurchmesser des Endanschlagstegs 24 zur Außenseite 25.2 hin. Hierdurch wird ein sanfter Übergang geschaffen, der sowohl einen günstigen Kraftfluss beim Stoß auf den Endanschlagsteg 24 bewirkt, wie auch das Strömungshindernis in diesem Bereich bei einem schräg ausgerichteten Kugelstumpfelement 20 (siehe Figuren 1a, 3, 4) reduziert.

Eine umlaufende Nut 25.4 im Bereich der Außenseite 25.2 der Spitzrippe 25 vermeidet eine Materialanhäufung. Außerdem wird ein Festsetzen von Schmutzpartikeln zwischen der Außenseite 25.2 und der Kugelausnehmung 12 vermieden. Sollten beim Einbau einzelne Schmutzpartikel wie Sandkörner zwischen die Außenseite 25.2 der Spitzrippe 25 und die Kugelausnehmung 12 geraten, so würden sie bei der weiteren Bewegung des Kugelstumpfelements 20 zunächst in die Nut 25.4 geraten und sich nicht in dem schmalen Spalt zwischen den Kugelflächenabschnitten festsetzen.

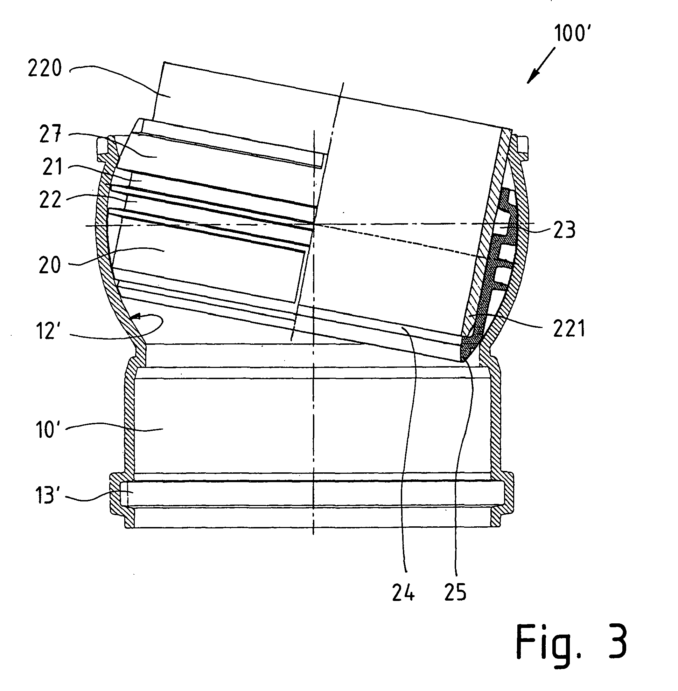

Figur 3 zeigt eine weitere Ausführungsform eines Kugelgelenk-Sattelstücks 100'. Dieses unterscheidet sich von der in Figur 1 dargestellten Ausführungsform lediglich durch die Ausbildung des Rohrelements 10', das als Rohrmuffe ausgebildet ist, in die wiederum ein Spitzende eines weiteren Rohrs eingeschoben werden kann. In eine Dichtungsaufnahmekammer 13' kann ein Dichtungsring eingebracht werden.

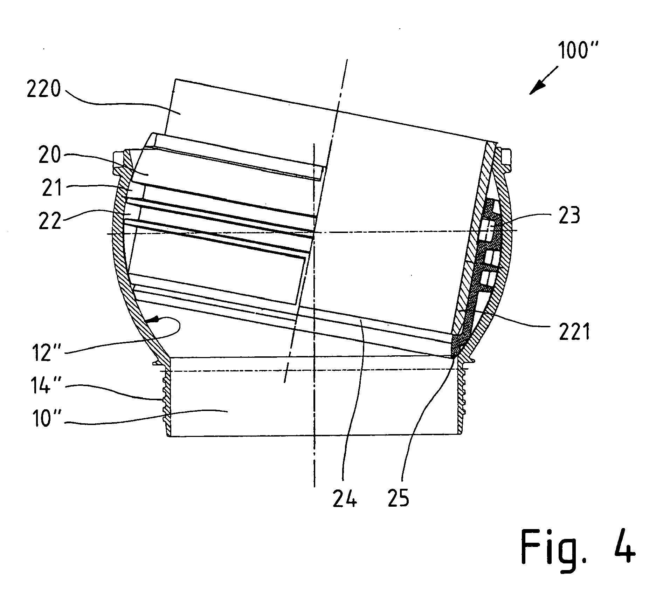

Gleiches gilt für die in Figur 4 dargestellte Ausführungsform eines Kugelgelenk-Sattelstücks 100". Auch hier sind Kugelausnehmung 12" und Kugelstumpfelement 20 unverändert gegenüber den zuvor dargestellten Ausführungsformen 100, 100'. Lediglich das Rohrelement 10' ist an seinem Außenumfang mit einem Gewinde 14' versehen, so dass es mit Zusatzteilen verschraubt werden kann. Hierdurch ist beispielsweise eine Verschraubung an einem Abzweig an einem Betonrohr möglich.

## Patentansprüche

1. Kugelgelenk-Sattelstück (100; 100'; 100") zum flüssigkeitsdichten Verbinden eines ersten Rohrs (210) mit einem Spitzende (221) eines zweiten Rohrs (220), bestehend aus einem Rohrelement (10; 10', 10"), das an seiner Innenseite mit wenigstens einer Kugelausnehmung (12; 12'; 12") versehen ist,
und aus einem in die Kugelausnehmung (12; 12'; 12") einsetzbaren Kugelstumpfelement (20), das an seiner Außenumfangsfläche wenigstens eine Dichtungsaufnahmekammer (21, 22) aufweist und in einem inneren Hohlraum als Rohrmuffe (28) zur Aufnahme des Spitzendes (221) der Rohres (220) ausgebildet ist.
**dadurch gekennzeichnet,**
**dass** die Rohrmuffe (28) des Kugelstumpfelements (20) durch einen kreisringförmigen Endanschlagssteg (24) begrenzt ist, der sich an eine Rohrmuffeninnenwand anschließt und senkrecht zu dieser angeordnet ist und dass das am Endanschlagsteg (24) gelegene Ende des Kugelstumpfelements (20) als Spitzrippe (25) ausgebildet ist, deren Außenseite (25.2) wenigstens teilweise durch die Kugelumfangsfläche des Kugelstumpfelements (20) gebildet ist und deren Innenseite (25.1) sich vom Innenumfang des Endanschlagsstegs (24) zu der Kugelumfangsfläche hin aufweitet.

2. Kugelgelenk-Sattelstück (100; 100'; 100") nach Anspruch 1, **dadurch gekennzeichnet, dass** am Außenumfang des Kugelstumpfelements (20) zwei Dichtungsaufnahmekammern (21, 22) vorhanden sind.

3. Kugelgelenk-Sattelstück (100; 100'; 100") nach Anspruch 1 oder 2, **dadurch gekennzeichnet, dass** die Rohrmuffe (28) eine Dichtungsaufnahmekammer (23) aufweist.

4. Kugelgelenk-Sattelstück (100; 100'; 100") nach einem der Ansprüche 1 bis 3, **dadurch gekennzeichnet, dass** die Innenseite (25.1) der Spitzrippe (25) in einem Winkel α von 9 bis 15° zur Längsachse des Rohrelements (10; 10', 10") angestellt ist.

5. Kugelgelenk-Sattelstück (100; 100'; 100") nach einem der Ansprüche 1 bis 5, **dadurch gekennzeichnet, dass** die Außenseite (25.2) der Spitzrippe (25) wenigstens eine umlaufende Nut (25.4) aufweist.

6. Kugelgelenk-Sattelstück (100) nach einem der Ansprüche 1 bis 5, **dadurch gekennzeichnet, dass** das Rohrelement (10) mit einem Spitzende (11) versehen ist.

7. Kugelgelenk-Sattelstück (100') nach einem der Ansprüche 1 bis 5, **dadurch gekennzeichnet, dass** das Rohrelement (10') als Rohrmuffe zur Aufnahme eines Spitzendes eines Rohrs ausgebildet ist.

8. Kugelgelenk-Sattelstück (100") nach einem der Ansprüche 1 bis 5, **dadurch gekennzeichnet, dass** das Rohrelement (10") wenigstens endseitig an seinem Außenumfang mit einem Gewinde (14") und/oder Rastrippen versehen ist.
